# EUROPEAN PATENT APPLICATION

(11) **EP 4 513 985 A1**
(43) Date of publication of application: **26.02.2025**
(21) Application number: 23815208.6
(22) Date of filing: 30.05.2023
(51) Int. Cl.: H04W 52/02, H04W 68/02

(54) **COMMUNICATION METHOD AND COMMUNICATION APPARATUS**

(30) Priority: 02.06.2022 CN 202210626015; 10.06.2022 CN 202210654913
(71) Applicant: Huawei Technologies Co., Ltd., Shenzhen, Guangdong 518129 (CN)
(72) Inventor: XUE, Yifan, Shenzhen, Guangdong 518129 (CN); XUE, Lixia, Shenzhen, Guangdong 518129 (CN); XU, Haibo, Shenzhen, Guangdong 518129 (CN)
(74) Representative: Grünecker Patent- und Rechtsanwälte PartG mbB
(86) International application number: PCT/CN2023/097125
(87) International publication number: WO 2023/232029

(57) **Abstract**

A communication method and a communication apparatus are provided. The method may include: A terminal device receives a first wake-up signal, where the first wake-up signal is used to wake up a terminal device group, the terminal device group includes at least two terminal devices, and the at least two terminal devices include the terminal device; and the terminal device accesses a network device based on the first wake-up signal. The network device may wake up a group of terminal devices by sending a wake-up signal. In other words, the group of terminal devices may access the network device based on the same wake-up signal. In this way, resource overheads caused by waking up the at least two terminal devices can be reduced. The method provided in embodiments may be applied to a communication system, for example, a 5G communication system or an NR communication system, an LTE communication system, a V2X communication system, a D2D communication system, an M2M communication system, an MTC communication system, or an internet of things communication system.

## Description

This application claims priorities to Chinese Patent Application No. 202210626015.3, filed with the China National Intellectual Property Administration on June 2, 2022 and entitled "METHOD FOR WAKING UP END DEVICE", and to Chinese Patent Application No. 202210654913.X, filed with the China National Intellectual Property Administration on June 10, 2022 and entitled "COMMUNICATION METHOD AND COMMUNICATION APPARATUS", both of which are incorporated herein by reference in their entireties.

### TECHNICAL FIELD

This application relates to the communication field, and more specifically, to a communication method and a communication apparatus.

### BACKGROUND

A terminal device may receive a wake-up signal through a separate low-power small circuit such as a wake-up radio (wake-up radio, WUR), and a main receiver may be in a sleep state. After obtaining the wake-up signal through detection through the WUR, the terminal device triggers wake-up of the main receiver. After the main receiver is woken up, the terminal device may receive data or the like through the main receiver.

In some scenarios, a network device may send data in a broadcast or multicast manner. In conventional technologies, if the main receiver of the terminal device is in the sleep state, the network device needs to send, one by one, paging to all terminal devices that need to receive the data. This may cause high paging resource overheads.

### SUMMARY

This application provides a communication method and a communication apparatus, to reduce resource overheads caused by paging at least two terminal devices one by one.

According to a first aspect, a communication method is provided. The method may be performed by a terminal device, or may be performed by a component (such as a chip or a circuit) of the terminal device. This is not limited herein. For ease of description, the following uses an example in which the method is performed by the terminal device for description.

The method may include: A terminal device receives a first wake-up signal, where the first wake-up signal is used to wake up a terminal device group, the terminal device group includes at least two terminal devices, and the at least two terminal devices include the terminal device; and the terminal device accesses a network device based on the first wake-up signal.

For example, in an example in which the terminal device is a first terminal device, the method may include: The first terminal device receives a first wake-up signal, where the first wake-up signal is used to wake up a terminal device group, the terminal device group includes at least two terminal devices, and the at least two terminal devices include the first terminal device; and the first terminal device accesses a network device based on the first wake-up signal.

According to the foregoing technical solution, the network device wakes up a group of terminal devices by sending a wake-up signal. In other words, the group of terminal devices may access the network device based on the same wake-up signal. In some scenarios, for example, the network device needs to send data to a group of terminal devices. In comparison with a solution in which the network device sends a wake-up signal for each terminal device to each terminal device in the group of terminal devices one by one, resource overheads caused by waking up the terminal devices can be reduced in the solution in this embodiment of this application in which the group of terminal devices are woken up by the wake-up signal that is sent.

Further, optionally, if the network device sends the wake-up signal for each terminal device to each terminal device in the group of terminal devices one by one, a transmission delay of sending the data by the network device to each terminal device may increase. In this case, the group of terminal devices are woken up by using the wake-up signal, so that the group of terminal devices may access the network device based on the same wake-up signal, and then receive the data sent by the network device. This can reduce the transmission delay.

With reference to the first aspect, in some implementations of the first aspect, the first wake-up signal includes a first identifier, and the first identifier is associated with the terminal device group.

According to the foregoing technical solution, if the network device needs to wake up a group of terminal devices, the network device may send the first wake-up signal, and include the first identifier in the first wake-up signal. In this way, the group of terminal devices associated with the first identifier may be woken up by using the first wake-up signal.

With reference to the first aspect, in some implementations of the first aspect, the first wake-up signal includes first information, and the first information represents that the first wake-up signal is used to wake up the terminal device group.

With reference to the first aspect, in some implementations of the first aspect, the first information indicates that a format of the first wake-up signal is a first format, and the first format represents that the first wake-up signal is used to wake up the terminal device group.

According to the foregoing technical solution, wake-up signals in different formats may be defined to distinguish whether the wake-up signal is used to wake up a group of terminal devices. To be specific, if a format of the wake-up signal is the first format, it represents that the wake-up signal is used to wake up the group of terminal devices.

With reference to the first aspect, in some implementations of the first aspect, the first identifier includes a first sub-identifier and a second sub-identifier, the first sub-identifier indicates the terminal device group, and the second sub-identifier represents waking up the terminal device group indicated by the first sub-identifier.

For example, if the terminal device receives a second wake-up signal, where the second wake-up signal includes an identifier of a terminal device, the identifier of the terminal device includes the first sub-identifier and a third sub-identifier, and the third sub-identifier represents waking up the terminal device; the terminal device accesses the network device based on the second wake-up signal. In other words, the terminal device may access the network device based on the first wake-up signal, or may access the network device based on the second wake-up signal. In this way, when one terminal device needs to be woken up in some cases, the terminal device may also be woken up based on the second wake-up signal.

According to the foregoing technical solution, whether the wake-up signal is used to wake up one terminal device or a group of terminal devices may be distinguished depending on whether a sub-identifier other than the first sub-identifier in the wake-up signal is the second sub-identifier or the third sub-identifier.

With reference to the first aspect, in some implementations of the first aspect, a value of the second sub-identifier is a preset value.

With reference to the first aspect, in some implementations of the first aspect, the first identifier is a group identifier of the terminal device group, a value of the group identifier falls within a first value range, a value of an identifier of each terminal device in the terminal device group falls within a second value range, and the first value range is different from the second value range.

For example, the first identifier is the group identifier of the terminal device group, and the value of the group identifier is different from the value of the identifier of each terminal device in the terminal device group.

According to the foregoing technical solution, the identifier of the terminal device and the group identifier of the terminal device group respectively belong to different value ranges. In other words, a value of an identifier of any terminal device is different from a value of an identifier of any terminal device group. In this way, whether the wake-up signal wakes up one terminal device or a group of terminal devices may be distinguished based on the value.

With reference to the first aspect, in some implementations of the first aspect, the terminal device includes a main module and a wake-up module. That a terminal device receives a first wake-up signal includes: The terminal device receives the first wake-up signal through the wake-up module. That the terminal device accesses a network device based on the first wake-up signal includes: The terminal device accesses the network device based on the first wake-up signal through the main module.

With reference to the first aspect, in some implementations of the first aspect, that a terminal device receives a first wake-up signal includes: The terminal device receives the first wake-up signal on a wake-up link. That the terminal device accesses a network device based on the first wake-up signal includes: The terminal device accesses the network device based on the first wake-up signal on a main link.

According to a second aspect, a communication method is provided. The method may be performed by a network device, or may be performed by a component (such as a chip or a circuit) of the network device. This is not limited. For ease of description, the following uses an example in which the method is performed by the network device for description.

The method may include: A network device sends a first wake-up signal, where the first wake-up signal is used to wake up a terminal device group, and the terminal device group includes at least two terminal devices; and the network device receives random access preamble sequences from the at least two terminal devices.

With reference to the second aspect, in some implementations of the second aspect, the first wake-up signal includes a first identifier, and the first identifier is associated with the terminal device group.

With reference to the second aspect, in some implementations of the second aspect, the first wake-up signal includes first information, and the first information represents that the first wake-up signal is used to wake up the terminal device group.

With reference to the second aspect, in some implementations of the second aspect, the first information indicates that a format of the first wake-up signal is a first format, and the first format represents that the first wake-up signal is used to wake up the terminal device group.

With reference to the second aspect, in some implementations of the second aspect, the method further includes: The network device sends a third wake-up signal, where the third wake-up signal includes an identifier of a terminal device, a format of the third wake-up signal is a second format, and the second format represents that the third wake-up signal is used to wake up the terminal device.

With reference to the second aspect, in some implementations of the second aspect, the first identifier includes a first sub-identifier and a second sub-identifier, the first sub-identifier indicates the terminal device group, and the second sub-identifier represents waking up the terminal device group indicated by the first sub-identifier.

With reference to the second aspect, in some implementations of the second aspect, a value of the second sub-identifier is a preset value.

With reference to the second aspect, in some implementations of the second aspect, the method further includes: The network device sends a second wake-up signal, where the second wake-up signal includes an identifier of a terminal device, the identifier of the terminal device includes the first sub-identifier and a third sub-identifier, and the third sub-identifier represents waking up the terminal device.

With reference to the second aspect, in some implementations of the second aspect, the first identifier is a group identifier of the terminal device group, a value of the group identifier falls within a first value range, a value of an identifier of each terminal device in the terminal device group falls within a second value range, and the first value range is different from the second value range.

For example, the first identifier is the group identifier of the terminal device group, and the value of the group identifier is different from the value of the identifier of each terminal device in the terminal device group.

With reference to the second aspect, in some implementations of the second aspect, before the network device sends the first wake-up signal, the method further includes: The network device receives second information, where the second information includes an association relationship between the first identifier and identifiers of the at least two terminal devices, and the first identifier is associated with the terminal device group.

According to the foregoing technical solution, the network device may learn of the association relationship between the first identifier and the identifier of each terminal device in the terminal device group. In this way, if the network device needs to wake up the terminal device group, the network device may send the first identifier on a wake-up link, and does not need to send, on the wake-up link, the identifier of the terminal device included in the terminal device group, to reduce signaling overheads.

With reference to the second aspect, in some implementations of the second aspect, that a network device sends a first wake-up signal includes: The network device sends the first wake-up signal based on the association relationship.

With reference to the second aspect, in some implementations of the second aspect, that the network device receives second information includes: The network device receives the second information from a core network or another network device.

For example, the another network device is, for example, a last serving cell (last serving cell) or a last serving base station (last serving gNB).

With reference to the second aspect, in some implementations of the second aspect, the network device includes a main module and a wake-up module. That a network device sends a first wake-up signal includes: The network device sends the first wake-up signal through the wake-up module. That the network device receives random access preamble sequences from the at least two terminal devices includes: The network device receives the random access preamble sequences from the at least two terminal devices through the main module.

With reference to the second aspect, in some implementations of the second aspect, that a network device sends a first wake-up signal includes: The network device sends the first wake-up signal on a wake-up link. That the network device receives random access preamble sequences from the at least two terminal devices includes: The network device receives the random access preamble sequences from the at least two terminal devices on a main link.

For beneficial effects of the second aspect and the possible designs, refer to related descriptions of the first aspect. Details are not described herein again.

According to a third aspect, a communication method is provided. The method may be performed by a network device, or may be performed by a component (such as a chip or a circuit) of the network device. This is not limited. For ease of description, the following uses an example in which the method is performed by the network device for description.

The method may include: A network device receives second information, where the second information includes an association relationship between a first identifier and identifiers of at least two terminal devices, the first identifier is associated with a terminal device group, and the terminal device group includes the at least two terminal devices; and the network device sends a first wake-up signal, where the first wake-up signal is used to wake up the terminal device group.

According to the foregoing technical solution, the network device may learn of the association relationship between the first identifier and the identifier of each terminal device in the terminal device group. In this way, if the network device needs to wake up the terminal device group, the network device may send the first identifier on a wake-up link, and does not need to send, on the wake-up link, the identifiers of the terminal devices included in the terminal device group, to reduce signaling overheads.

With reference to the third aspect, in some implementations of the third aspect, the method further includes: The network device receives random access preamble sequences from the at least two terminal devices.

With reference to the third aspect, in some implementations of the third aspect, that the network device sends a first wake-up signal includes: The network device sends the first wake-up signal based on the association relationship.

With reference to the third aspect, in some implementations of the third aspect, that a network device receives second information includes: The network device receives the second information from a core network or another network device.

For beneficial effects of the third aspect and the possible designs, refer to related descriptions of the second aspect. Details are not described herein again.

According to a fourth aspect, a communication method is provided. The method may be performed by a network device or a core network, or may be performed by a component (such as a chip or a circuit) of the network device or the core network. This is not limited.

The method may include: sending second information, where the second information includes an association relationship between a first identifier and identifiers of at least two terminal devices, the first identifier is associated with a terminal device group, and the terminal device group includes the at least two terminal devices.

For beneficial effects of the fourth aspect and the possible designs, refer to related descriptions of the second aspect. Details are not described herein again.

With reference to the first aspect to the fourth aspect, in some implementations, the first identifier is the group identifier of the terminal device group, and a length of the group identifier and a length of the identifier of each terminal device in the terminal device group are the same or different.

With reference to the first aspect to the fourth aspect, in some implementations, the first identifier is configured by the core network device or the network device.

For example, the network device is, for example, a last serving cell or a last serving gNB.

According to a fifth aspect, a communication method is provided. The method may be performed by a terminal device, or may be performed by a component (such as a chip or a circuit) of the terminal device. This is not limited. For ease of description, the following uses an example in which the method is performed by the terminal device for description.

The method may include: A terminal device receives indication information, where the indication information indicates that configuration information of a first frequency resource is updated, or the indication information is used to wake up all terminal devices that monitor a wake-up signal on the first frequency resource, where the wake-up signal is used to wake up at least one terminal device; and the terminal device receives, based on the indication information, information from a network device or accesses the network device by using a second frequency resource.

Alternatively, the method may include: A terminal device receives indication information, where the indication information indicates that configuration information of a wake-up link is updated, or the indication information is used to wake up some or all terminal devices that monitor a wake-up signal on the wake-up link, where the wake-up signal is used to wake up at least one terminal device; and the terminal device receives information from a network device or accesses the network device on a main link based on the indication information.

According to the foregoing technical solution, if the configuration information of the first frequency resource is updated or the configuration information of the wake-up link is updated, the network device may actively notify the terminal device, so that the terminal device can quickly obtain updated configuration information, and then monitor the wake-up signal based on the correct configuration information.

With reference to the fifth aspect, in some implementations of the fifth aspect, that the terminal device receives information from a network device by using a second frequency resource includes: The terminal device receives the configuration information of the first frequency resource from the network device by using the second frequency resource.

With reference to the fifth aspect, in some implementations of the fifth aspect, that the terminal device receives information from a network device on a main link includes: The terminal device receives the configuration information of the wake-up link from the network device on the main link.

According to a sixth aspect, a communication method is provided. The method may be performed by a network device, or may be performed by a component (such as a chip or a circuit) of the network device. This is not limited. For ease of description, the following uses an example in which the method is performed by the network device for description.

The method may include: A network device sends indication information, where the indication information indicates that configuration information of a first frequency resource is updated, or the indication information is used to wake up all terminal devices that monitor a wake-up signal on the first frequency resource, where the wake-up signal is used to wake up at least one terminal device; and the network device sends information to the at least one terminal device by using a second frequency resource, or the network device receives a random access preamble sequence from the at least one terminal device by using the second frequency resource.

Alternatively, the method may include: The network device sends indication information, where the indication information indicates that configuration information of a wake-up link is updated, or the indication information is used to wake up some or all terminal devices that monitor a wake-up signal on a wake-up link, where the wake-up signal is used to wake up at least one terminal device; and the network device sends information to the at least one terminal device on a main link, or the network device receives a random access preamble sequence from the at least one terminal device on the main link.

With reference to the sixth aspect, in some implementations of the sixth aspect, that the network device sends information to the at least one terminal device by using a second frequency resource includes: The network device sends the configuration information of the first frequency resource to the at least one terminal device by using the second frequency resource.

With reference to the sixth aspect, in some implementations of the sixth aspect, that the network device sends information to the at least one terminal device on a main link includes: The network device sends the configuration information of the wake-up link to the at least one terminal device on the main link.

For beneficial effects of the sixth aspect and the possible designs, refer to related descriptions of the fifth aspect. Details are not described herein again.

With reference to the fifth aspect or the sixth aspect, in some implementations, the configuration information of the wake-up link includes information about a frequency resource corresponding to the wake-up link.

With reference to the fifth aspect or the sixth aspect, in some implementations, the first frequency resource is the frequency resource corresponding to the wake-up link, or the first frequency resource is a part of the frequency resource corresponding to the wake-up link, where the wake-up link is a link for transmitting the wake-up signal.

With reference to the fifth aspect or the sixth aspect, in some implementations, the indication information is a preset identifier.

According to a seventh aspect, a communication apparatus is provided. The apparatus is configured to perform the method provided in any one of the first aspect to the sixth aspect. Specifically, the apparatus may include a unit and/or a module configured to perform the method provided in any implementation in any one of the first aspect to the sixth aspect, for example, a processing unit and/or a communication unit.

In an implementation, the apparatus is a communication device (for example, a terminal device or a network device). When the apparatus is the communication device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in the communication device (for example, the terminal device or the network device). When the apparatus is the chip, the chip system, or the circuit used in the communication device, the communication unit may be an input/output interface, an interface circuit, an output circuit, an input circuit, a pin, a related circuit, or the like on the chip, the chip system, or the circuit; and the processing unit may be the at least one processor, a processing circuit, a logic circuit, or the like.

According to an eighth aspect, a communication apparatus is provided. The apparatus includes a memory, configured to store a program; and at least one processor, configured to execute a computer program or instructions stored in the memory, to perform the method in any implementation in any one of the first aspect to the sixth aspect.

In an implementation, the apparatus is a communication device (for example, a terminal device or a network device).

In another implementation, the apparatus is a chip, a chip system, or a circuit used in the communication device (for example, the terminal device or the network device).

According to a ninth aspect, this application provides a processor, configured to perform the method provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a tenth aspect, a computer-readable storage medium is provided. The computer-readable medium stores program code to be executed by a device, and the program code is used to perform the method in any implementation in any one of the first aspect to the sixth aspect.

According to an eleventh aspect, a computer program product including instructions is provided. When the computer program product runs on a computer, the computer is enabled to perform the method in any implementation in any one of the first aspect to the sixth aspect.

According to a twelfth aspect, a chip is provided. The chip includes a processor and a communication interface. The processor reads, through the communication interface, instructions stored in a memory, to perform the method provided in any implementation in any one of the first aspect to the sixth aspect.

Optionally, in an implementation, the chip further includes the memory. The memory stores a computer program or instructions. The processor is configured to execute the computer program or the instructions stored in the memory. When the computer program or the instructions is/are executed, the processor is configured to perform the method provided in any implementation in any one of the first aspect to the sixth aspect.

According to a thirteenth aspect, a communication system is provided, including the foregoing terminal device and the foregoing network device.

### BRIEF DESCRIPTION OF DRAWINGS

FIG. 1 is a diagram of a wireless communication system 100 applicable to an embodiment of this application;
FIG. 2 is a diagram in which a terminal device receives a wake-up signal through a wake-up circuit;
FIG. 3 is a diagram of a waveform of a wake-up signal during OOK modulation;
FIG. 4 is a diagram of a communication method 400 according to an embodiment of this application;
FIG. 5 is a diagram of a wake-up signal;
FIG. 6 is a diagram of an identifier in a wake-up signal;
FIG. 7 is a diagram of frequency resources occupied by a wake-up signal and another signal;
FIG. 8 is a diagram of a communication method 800 according to another embodiment of this application;
FIG. 9 is a diagram of a communication apparatus 900 according to an embodiment of this application;
FIG. 10 is a diagram of another communication apparatus 1000 according to an embodiment of this application; and
FIG. 11 is a diagram of a chip system 1100 according to an embodiment of this application.

### DESCRIPTION OF EMBODIMENTS

The following describes technical solutions of embodiments of this application with reference to accompanying drawings.

The technical solution provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6^{th} generation mobile communication system. The technical solution provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or other communication systems.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device with a wireless connection function. Currently, examples of some terminals are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a wearable device, a terminal device in a 5G network, a terminal device in a future evolved public land mobile network (public land mobile network, PLMN), or the like. This is not limited in this embodiment of this application.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device may be the terminal device, or may be an apparatus that can support the terminal device in implementing the function, for example, a chip system or a chip. The apparatus may be installed in the terminal device. In embodiments of this application, the chip system may include a chip, or may include a chip and another discrete component.

A network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that enables the terminal device to access a wireless network. The base station may cover various names below in a broad sense, or may be replaced with the following names, for example, a NodeB (NodeB), an evolved NodeB (evolved NodeB, eNB), a next generation NodeB (next generation NodeB, gNB), a relay station, an access point, a transmission reception point (transmission reception point, TRP), a transmission point (transmission point, TP), a primary station, a secondary station, a multi-standard radio (multi-standard radio, MSR) node, a home base station, a network controller, an access node, a wireless node, an access point (AP), a transmission node, a transceiver node, a baseband unit (BBU), a remote radio unit (remote radio unit, RRU), an active antenna unit (active antenna unit, AAU), a radio head (remote radio head, RRH), a central unit (central unit, CU), a distributed unit (distributed unit, DU), or a located node. The base station may be a macro base station, a micro base station, a relay node, a donor node, or the like, or a combination thereof. The base station may be further a communication module, a modem, or a chip disposed in the foregoing device or apparatus. The base station may alternatively be a mobile switching center, a device that undertakes a base station function in D2D, V2X, and M2M communication, a network side device in a 6G network, a device that undertakes a base station function in a future communication system, or the like. The base station may support networks using a same access technology or different access technologies. Neither of a specific technology and a specific device form used for the network device is limited in embodiments of this application.

The base station may be fixed or movable. For example, a helicopter or a drone may be configured to serve as a mobile base station, and at least one cells may move based on a position of the movable base station. In other examples, the helicopter or the drone may be configured as a device to communicate with another base station.

In some deployments, the network device mentioned in embodiments of this application may be a device including a CU, a device including a DU, or a device including a CU and a DU, or a device including a CU node (central unit-control plane (central unit-control plane, CU-CP)), a user plane CU node (central unit-user plane (central unit-user plane, CU-UP)), and a DU node.

The network device and the terminal device may be deployed on land, including an indoor scenario or an outdoor scenario, and a handheld scenario or a vehicle-mounted scenario; or may be deployed on water; or may be deployed on an airplane, a balloon, and a satellite in the air. Scenarios in which the network device and the terminal device are located are not limited in embodiments of this application.

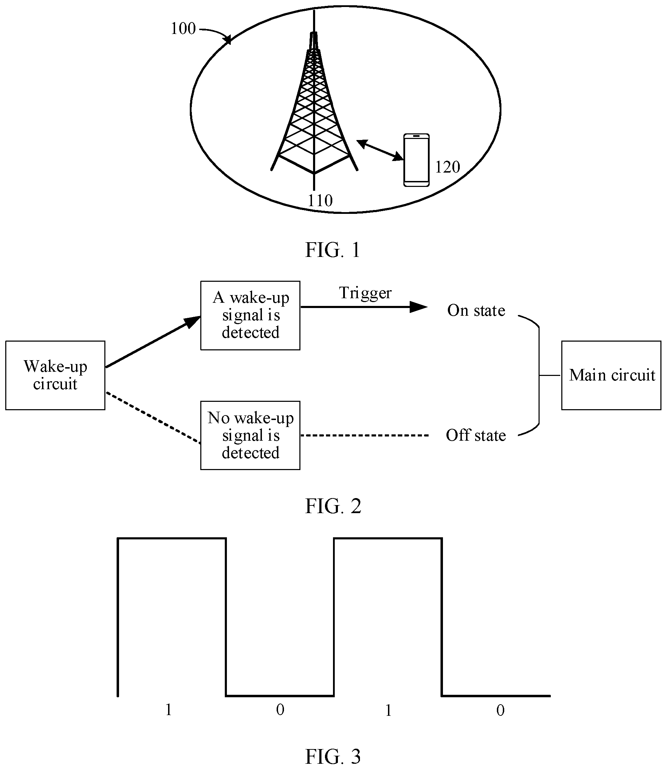

First, a network architecture applicable to this application is briefly described with reference to FIG. 1.

FIG. 1 is a diagram of a wireless communication system 100 applicable to an embodiment of this application. As shown in FIG. 1, the wireless communication system 100 may include at least one network device, for example, a network device 110 shown in FIG. 1. The wireless communication system 100 may further include at least one terminal device, for example, a terminal device 120 shown in FIG. 1. At least one antenna may be configured for both the network device and the terminal device, and the network device and the terminal device may communicate with each other by using a multi-antenna technology.

When the network device communicates with the terminal device, the network device may manage at least one cell, and there may be an integer quantity of terminal devices in one cell. Optionally, the network device 110 and the terminal device 120 form a single-cell communication system. Without loss of generality, a cell is denoted as a cell #1. The network device 110 may be a network device in the cell #1, or the network device 110 may serve a terminal device (for example, the terminal device 120) in the cell #1.

It should be noted that, a cell may be understood as an area within coverage of a radio signal of the network device.

It should be understood that, FIG. 1 is merely a simplified diagram of an example for ease of understanding. The wireless communication system 100 may further include another network device or may further include another terminal device, which is not shown in FIG. 1. Embodiments of this application may be applicable to any communication scenario in which a transmit end device communicates with a receive end device.

For ease of understanding of embodiments of this application, terms in this application are briefly described.

### 1. Paging (paging)

When a terminal device is in an idle (idle) state or an inactive (inactive) state, the terminal device may periodically receive paging. For example, a paging receiving procedure performed by the terminal device includes the following steps.
(1) The terminal device may obtain, through calculation based on an identifier (identifier, ID) (UE ID) of the terminal device, a paging frame (paging frame, PF) and a position of a paging occasion (paging occasion, PO) in the PF.
(2) The terminal device monitors a physical downlink control channel (physical downlink control channel, PDCCH) (for example, the physical downlink control channel may also be referred to as a paging PDCCH) in the PO, and the PDCCH includes downlink control information (downlink control information, DCI) (for example, the downlink control information may also be referred to as paging DCI).
(3) If the terminal device obtains the PDCCH through detection, the terminal device receives a physical downlink shared channel (physical downlink shared channel, PDSCH) (for example, the physical downlink shared channel may also be referred to as a paging PDSCH) at which the PDCCH is scheduled. The paging PDSCH includes a paging message (paging message), and the paging message may indicate which terminal devices are paged. For example, the paging PDSCH includes a maximum of 32 paging records (paging records), each paging record may include one UE ID, and the UE ID indicates which UE is paged.

Paging can be classified into two types: core network paging (CN paging) and access network paging (RAN paging).
(1) Core network paging refers to paging received when the UE is in the idle state, and is initiated by a core network. The core network sends a UE ID of a paged UE to a network device that is to send paging information. For the core network paging, the UE ID is a 5G system architecture evolution (system architecture evolution, SAE) temporary mobile subscriber identity (5G SAE temporary mobile subscriber identity, 5G-S-TMSI), and a length of the UE ID is, for example, 48 bits. The 5G-S-TMSI may be allocated by an access and mobility management function (access and mobility management function, AMF).
(2) Access network paging refers to paging received when the UE is in the inactive state, and is initiated by a network device. The network device may send a UE ID of a paged UE to another network device that is to send paging information. The network device is a base station corresponding to a cell in which the UE is located when the UE changes from a connected (connected) state to the inactive state. The cell may also be referred to as a last serving cell (last serving cell). For the access network paging, the UE ID is an inactive radio network temporary identifier (inactive radio network temporary identifier, I-RNTI), and a length of the UE ID is, for example, 40 bits. The I-RNTI may be allocated by the last serving cell.

It should be understood that, the foregoing paging receiving procedure is merely an example for description. For example, refer to a related standard. This is not limited in this application.

### 2. Main circuit and wake-up circuit

Generally, regardless of whether a terminal device performs a paging receiving procedure in an idle state or an inactive state, or the terminal device receives data in a connected state, a same receiving module, a same receiver, or a same receiver circuit is used. In this application, for ease of description, a module that completes these functions or performs related steps is referred to as the main circuit. It may be understood that, the main circuit is merely named for differentiation, and a specific name of the main circuit does not limit the protection scope of this application. For ease of description, the following describes the main circuit in a unified manner.

A signal received by the terminal device through the main circuit may be referred to as being transmitted on a main link. The main link represents a connection relationship between the terminal device and a network device, and is a logical concept rather than a physical entity. It may be understood that, the main link is merely named for differentiation, and a specific name of the main link does not limit the protection scope of this application.

When the terminal device receives paging through the main circuit, power consumption is high. For example, when receiving the paging, the terminal device first needs to receive a downlink signal by using a receiving module of the main circuit, and then the terminal device further needs to perform blind detection on a PDCCH, decode a received PDSCH, and the like. All these cause high power consumption. In addition, because the main circuit is complex, reference power consumption or static power consumption during running of the main circuit is high.

To reduce the power consumption caused by receiving the paging by the terminal device, in a possible method, the terminal device may receive the signal through a separate low-power small circuit, and the signal received by the terminal device through the low-power small circuit may be referred to as a low-power wake-up signal (low power wake-up signal, LP-WUS) or a wake-up signal. For example, the wake-up signal may indicate paging-related information, and the paging-related information may include, for example, whether one terminal device or a group of terminal devices are paged. The low-power small circuit may be implemented by using a separate small circuit or chip with a simple structure, and which consumes low power. For example, the low-power small circuit may be referred to as a wake-up radio (wake-up radio, WUR), may be referred to as a wake-up circuit, may be referred to as a low-power circuit, may be referred to as a wake-up receiver (wake-up receiver, WUR), or the like. A name of the low-power small circuit is not limited in this application. In this application, for ease of description, the low-power small circuit is referred to as the wake-up circuit. It may be understood that, the wake-up circuit is merely named for differentiation, and a specific name of the wake-up circuit does not limit the protection scope of this application. For ease of description, the following describes the wake-up circuit in a unified manner. In addition, for ease of description below, a signal received by the terminal device through the wake-up circuit is referred to as a wake-up signal.

A signal received by the terminal device by using the wake-up circuit may be referred to as being transmitted on a wake-up link. The wake-up link represents a connection relationship between the terminal device and a network device, and is a logical concept rather than a physical entity. It may be understood that, the wake-up link is merely named for differentiation, and a specific name of the wake-up link does not limit the protection scope of this application.

FIG. 2 is a diagram in which a terminal device receives a wake-up signal through a wake-up circuit.

As shown in FIG. 2, when the terminal device receives the signal through the wake-up circuit, if the terminal device obtains no wake-up signal associated with the terminal device through detection, the terminal device continues receiving the signal through the wake-up circuit, and a main circuit may be in an off state or a sleep state; or if the terminal device obtains a wake-up signal associated with the terminal device through detection, the terminal device triggers wake-up of a main circuit, that is, enables the main circuit to be in/switched to an on state. The on state may also be referred to as an operating state, or referred to as an active state. After the main circuit is turned on, the terminal device may perform a paging receiving process. For example, the terminal device receives a paging PDCCH, and receives a paging PDSCH after obtaining the paging PDCCH through detection at a PO corresponding to the terminal device. Alternatively, after the main circuit is turned on, the terminal device may directly perform an access procedure. In this case, the wake-up signal received by the wake-up circuit may directly indicate a paged UE. After turning on the main circuit, the terminal device does not need to receive paging through the main circuit, but directly initiates random access.

To ensure a power consumption gain, the wake-up signal may be modulated through on-off keying (on-off keying, OOK), or may be modulated through frequency shift keying (frequency shift keying, FSK). The following briefly describes the two modulation modes.
(1) OOK: Information is modulated depending on whether a signal is sent, and a corresponding wake-up circuit may receive a signal in an envelope detection method. In the OOK modulation technology, demodulation can be implemented by using a receiver with extremely low complexity, so that an objective of a low-power wake-up circuit can be achieved.

FIG. 3 is a diagram of a waveform of a wake-up signal during OOK modulation

When the OOK modulation is used for the signal, each bit, namely, an encoded bit, may correspond to one symbol (symbol). One symbol may also be referred to as one chip (chip), or may be referred to as another name. This is not limited herein.

For example, when the bit is 1, a signal is sent in the symbol length (that is, a signal transmit power is not 0 in the symbol length); or when the bit is 0, no signal is sent in the symbol length (that is, a signal transmit power is 0 in the symbol length). As shown in FIG. 3, the waveform shown in FIG. 3 may represent four bits 1010.

For another example, when the bit is 0, a signal is sent in the symbol length (that is, a signal transmit power is not 0 in the symbol length); or when the bit is 1, no signal is sent in the symbol length (that is, a signal transmit power is 0 in the symbol length). In this case, the waveform shown in FIG. 3 may represent four bits 0101.

(2) FSK is a modulation technology that modulates information on a carrier frequency. When the FSK modulation is used, one symbol may carry at least one piece of bit information. For example, it is assumed that an information bit that needs to be transmitted is a sequence including 0 and 1, and a modulated signal has four possible positions in frequency domain. For example, a signal whose sending frequency is *f*₁ represents that bits "00" are transmitted, a signal whose sending frequency is *f*₂ represents that bits "01" are transmitted, a signal whose sending frequency is *f*₃ represents that bits "10" are transmitted, and a signal whose sending frequency is *f*₄ represents that bits "11" are transmitted. At a receiving end, a frequency discrimination circuit may be used, to detect a frequency of a received signal. If it is detected that the signal frequency is *f*₁, it is determined that the received bits are 00; if it is detected that the signal frequency is *f*₂, it is determined that the received bits are 01; if it is detected that the signal frequency is *f*₃, it is determined that the received bits are 10; and if it is detected that the signal frequency is *f*₄, it is determined that the received bits are 11.

The foregoing briefly describes terms used in this application, and details are not described in the following embodiments.

In some scenarios, for example, an IoT scenario, a network device may send data in a broadcast or multicast manner. For example, in a software upgrade push (software delivery over wireless) scenario, specifically, software upgrade packages are sent to all terminals at a time in a broadcast manner in a network, to avoid a waste of air interface resources due to a plurality of times of repeated unicast transmission (namely, point-to-point transmission from the network device to a terminal). For another example, in a video surveillance scenario, specifically, in some scenarios, at least two cameras may be deployed. To save energy, only some cameras may be in a long-term enabled state, and the remaining cameras may be in a disabled state. Alternatively, to avoid network congestion, although all cameras have capabilities of being connected to a network, only some cameras may be always connected to the network (that is, the some cameras are in a connected state), and the remaining cameras are not connected to the network (that is, the other cameras are in an idle state). When obtaining an intrusion event through detection, the cameras in the connected state report the intrusion event to the network. The network delivers information to trigger the remaining cameras to wake up or access the network.

Currently, only paging on a single UE is considered. In some scenarios, when the network device sends data in a broadcast or multicast manner, the network device needs to send, one by one, paging to all UEs that need to receive the data. In this way, high paging resource overheads are caused. In addition, because paging messages of the UEs need to be sent one by one, a long transmission delay is also caused.

In view of this, this application provides a solution in which the wake-up resource overheads and the transmission delay are reduced by waking up a group of terminal devices.

It may be understood that, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The following describes in detail a method provided in embodiments of this application with reference to the accompanying drawings. Embodiments of this application may be applied to the network architecture shown in FIG. 1. However, this is not limited.

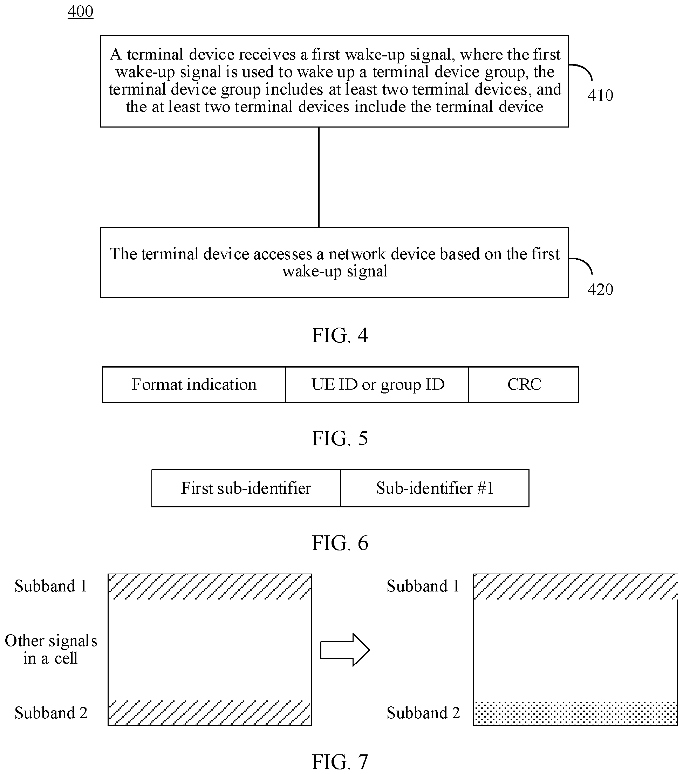

FIG. 4 is a diagram of a communication method 400 according to an embodiment of this application. The method 400 may include the following steps.

410: A terminal device receives a first wake-up signal, where the first wake-up signal is used to wake up a terminal device group, the terminal device group includes at least two terminal devices, and the at least two terminal devices include the terminal device.

Each terminal device group may include at least two terminal devices, and one terminal device may belong to different terminal device groups.

For example, a terminal device 1 belongs to a terminal device group 1, and the terminal device 1 further belongs to a terminal device group 2. The terminal device group 1 and the terminal device group 2 may be obtained through classification in different manners. For example, the terminal device group 1 is obtained through classification based on a terminal device type, and the terminal device group 2 is obtained through classification based on an area. In other words, terminal devices included in the terminal device group 1 are terminal devices of a specific type, and terminal devices included in the terminal device group 2 are terminal devices in an area. The foregoing classification manner of the terminal device group is an example for description, and the division manner of the terminal device group is not limited in this embodiment of this application.

420: The terminal device accesses a network device based on the first wake-up signal.

That the terminal device accesses a network device based on the first wake-up signal represents that, after the terminal device receives the first wake-up signal, if the terminal device learns that the terminal device is woken up, the terminal device accesses the network device. That the terminal device accesses the network device may be, for example, that the terminal device initiates random access to the network device. For example, the terminal device sends a random access preamble (preamble) to the network device.

According to this embodiment of this application, the network device wakes up a group of terminal devices by sending a wake-up signal. In other words, the group of terminal devices may access the network device based on the same wake-up signal. In some scenarios, for example, the network device needs to send data to a group of terminal devices. In comparison with a solution in which the network device sends a wake-up signal for each terminal device to each terminal device in the group of terminal devices one by one, resource overheads caused by waking up the terminal devices can be reduced in the solution in this embodiment of this application in which the group of terminal devices are woken up by using the same wake-up signal. Further, optionally, if the network device sends the wake-up signal for each terminal device to each terminal device in the group of terminal devices one by one, a transmission delay of sending the data by the network device to each terminal device may increase. In this case, the group of terminal devices are woken up by sending the wake-up signal, so that the group of terminal devices may access the network device based on the same wake-up signal, and then receive the data sent by the network device. This can reduce the transmission delay.

Optionally, the first wake-up signal includes a first identifier, and the first identifier is associated with the terminal device group. In this way, if the network device needs to wake up a group of terminal devices, the network device may send the wake-up signal (referred to as the first wake-up signal for differentiation), and include the first identifier in the first wake-up signal. In this way, the group of terminal devices may be woken up by using the first wake-up signal. The first identifier is associated with the terminal device group, which represents that the first identifier may identify the terminal device group. For example, the first identifier is a group identifier of the terminal device group. Optionally, the first identifier may be configured by the network device (for example, a last serving cell or a last serving gNB), or may be configured by a core network. This is not limited.

The network device may wake up the terminal device group. In some cases, the network device may alternatively need to wake up one terminal device. For example, if the network device needs to separately send data to a terminal device, the network device may wake up the terminal device, and does not need to wake up a terminal device group to which the terminal device belongs. Therefore, in a possible implementation, at least two identifiers are configured for one terminal device, and both the at least two identifiers may be used to wake up the terminal device. For example, one identifier is used to wake up a terminal device group to which the terminal device belongs, and the other identifier is used to wake up the terminal device. Specifically, when sending a wake-up signal on a wake-up link, the network device may include, in the wake-up signal, the identifiers configured for the terminal device, to wake up the terminal device or the terminal device group to which the terminal device belongs.

The at least two identifiers may include one UE ID and at least one group ID. In this embodiment of this application, for ease of description and differentiation, a UE ID represents a wake-up identifier (for example, a paging ID) of one terminal device, and a group ID represents a wake-up identifier (for example, a paging group ID) of a group of terminal devices. A length of the UE ID and a length of the group ID may be the same or different.

For example, if the network device needs to wake up one terminal device, the network device may send a wake-up signal. The wake-up signal includes a UE ID of the terminal device. After receiving the wake-up signal, the terminal device learns, based on the UE ID in the wake-up signal, that the terminal device is woken up, and then may access the network device.

For another example, if the network device needs to wake up a group of terminal devices, the network device may send a wake-up signal. The wake-up signal includes a group ID of a terminal device group to which the terminal device belongs. After receiving the wake-up signal, the terminal device learns, based on the group ID in the wake-up signal, that the terminal device is woken up, and then may access the network device.

Optionally, the terminal device determines whether the network device wakes up the terminal device or wakes up the terminal device group to which the terminal device belongs. In a possible implementation, the terminal device determines, depending on whether an identifier in the wake-up signal is the UE ID or the group ID, whether the network device wakes up one terminal device or a group of terminal devices.

For example, when determining that the network device wakes up the terminal device and wakes up the terminal device group to which the terminal device belongs, the terminal device may perform different operations. For example, if the terminal device determines that the network device wakes up the terminal device, the terminal device may directly initiate random access; or if the terminal device determines that the network device wakes up the terminal device group to which the terminal device belongs, the terminal device may directly monitor data broadcast by the network device.

It may be learned from the foregoing descriptions that, in this embodiment of this application, the network device may wake up one terminal device by sending the wake-up signal, or may wake up a group of terminal devices by sending the wake-up signal. The following describes several possible solutions for distinguishing between the two wake-up manners.

Solution 1: The first wake-up signal includes first information, and the first information represents that the first wake-up signal is used to wake up the terminal device group.

In Solution 1, if the first wake-up signal includes the first identifier, the first identifier may be the group ID of the terminal device group, and the first information may represent that the first wake-up signal is used to wake up the terminal device group identified by the first identifier, in other words, the terminal device group identified by the first identifier is to be woken up.

There are many design manners of the first information. This is not limited in this embodiment of this application.

In a first possible design, if a wake-up signal sent by the network device carries the first information (for example, a specific field), it represents that the wake-up signal is used to wake up the terminal device group; or if the wake-up signal sent by the network device carries no first information (for example, a specific field), it represents that the wake-up signal is used to wake up one terminal device.

In a second possible design, if a wake-up signal sent by the network device carries the first information, and the first information indicates that a format of the wake-up signal is a first format, it represents that the wake-up signal is used to wake up the terminal device group; or if the wake-up signal sent by the network device carries the first information, and the first information indicates that a format of the wake-up signal is a second format, it represents that the wake-up signal is used to wake up one terminal device. According to this design, the two wake-up manners may be distinguished by defining wake-up signals in different formats (formats). The following mainly describes the second possible design.

According to the second possible design, if the format of the wake-up signal is the second format, it represents that the wake-up signal is used to wake up one terminal device; or if the format of the wake-up signal is the first format, it represents that the wake-up signal is used to wake up the group of terminal devices.

For example, if the network device needs to wake up one terminal device, or the network device needs to separately wake up each terminal device, the network device sends a wake-up signal (referred to as a third wake-up signal for differentiation), where the third wake-up signal includes a UE ID of the terminal device that needs to be woken up, and a format of the wake-up signal is the second format; or if the network device needs to wake up a group of terminal devices, the network device sends the first wake-up signal, where the first wake-up signal includes a group ID of the terminal device group that needs to be woken up, and a format of the wake-up signal is the first format.

FIG. 5 is a diagram of a wake-up signal.

As shown in FIG. 5, the wake-up signal includes a format indication (an example of the first information). The format indication indicates a format of the wake-up signal. The wake-up signal further includes a UE ID of a terminal device that needs to be woken up or a group ID of a terminal device group that needs to be woken up. For example, if the wake-up signal is used to wake up one terminal device, the format indication in the wake-up signal indicates that the format of the wake-up signal is the second format, and the wake-up signal includes the UE ID of the terminal device that needs to be woken up; or if the wake-up signal is used to wake up a group of terminal devices, the format indication in the wake-up signal indicates that the format of the wake-up signal is the first format, and the wake-up signal includes the group ID of the terminal device group that needs to be woken up.

Optionally, the wake-up signal further includes a cyclic redundancy check (cyclic redundancy check, CRC), and the CRC may be located at an end position.

In Solution 1, a length of the UE ID and a length of the group ID may be the same or different, and lengths of wake-up signals in different formats may also be the same or different. For example, when the length of the UE ID and the length of the group ID are different, a length of the wake-up signal in a case in which the format of the wake-up signal is the second format and a length of the wake-up signal in a case in which the format of the wake-up signal is the first format may be the same or different. For example, if the length of the group ID is less than the length of the UE ID, the length of the wake-up signal in the case in which the format of the wake-up signal is the first format may be less than or equal to the length of the wake-up signal in the case in which the format of the wake-up signal is the second format. For example, if the length of the group ID is less than the length of the UE ID, a coding rate in the case in which the format of the wake-up signal is the first format is less than a coding rate in the case in which the format of the wake-up signal is the second format, so that a length of the wake-up signal in the case in which the format of the wake-up signal is the second format and a length of the wake-up signal in the case in which the format of the wake-up signal is the first format are the same.

According to the foregoing solution, the two wake-up manners may be distinguished by defining wake-up signals in different formats. To be specific, whether the wake-up signal is used to wake up one terminal device or a group of terminal devices may be distinguished based on the format of the wake-up signal.

Solution 2: The first wake-up signal includes the first identifier, the first identifier is the group identifier of the terminal device group, a value of the group identifier falls within a first value range, a value of an identifier of each terminal device in the terminal device group falls within a second value range, and the first value range is different from the second value range.

According to Solution 2, the two wake-up manners may be distinguished based on that a value of the UE ID and a value of the group ID are different. The value of the UE ID and the value of the group ID are different. In other words, a value of an identifier of any terminal device and a value of an identifier of any terminal device group are different. In this way, the two wake-up manners may be distinguished based on the values. A value range of the UE ID and a value range of the group ID may be predefined, for example, predefined in a standard, or may be allocated by the network device. This is not limited.

An example in which the network device allocates the UE ID and the group ID to the terminal device is used. The network device may configure the UE ID for the terminal device based on the first value range, and configure, based on the second value range, the group ID for the terminal device group to which the terminal device belongs. In this way, the value of the UE ID and the value of the group ID may be different, and whether the wake-up signal is used to wake up one terminal device or a group of terminal devices may be distinguished.

An example in which a length of the identifier carried in the wake-up signal is 2²⁴ is used, and the value range of the identifier may be 0 to 2²⁴-1. For example, the value range of the group ID may be 0 to 2²⁰-1 (an example of the first value range), and the value range of the UE ID may be 2²⁰ to 2²⁴-1 (an example of the second value range). In this way, the value of the group ID and the value of the UE ID are different, so that the two wake-up manners may be distinguished based on different values.

Optionally, in Solution 2, the wake-up signal used to wake up one terminal device and the wake-up signal used to wake up one group of terminal devices are in a same format. To be specific, whether to wake up one terminal device or a group of terminal devices may be distinguished depending on whether the identifier carried in the wake-up signal is the UE ID or the group ID. In this way, the wake-up signals do not need to be designed to be in two formats, so that design of the wake-up signal is simplified.

According to Solution 2, the two wake-up manners may be distinguished based on that the value of the UE ID and the value of the group ID are set to be different. In other words, whether the wake-up signal is used to wake up one terminal device or a group of terminal devices may be distinguished based on the identifier carried in the wake-up signal.

Solution 3: The first wake-up signal includes the first identifier, the first identifier includes a first sub-identifier and a second sub-identifier, the first sub-identifier indicates the terminal device group, and the second sub-identifier represents waking up the terminal device group indicated by the first sub-identifier.

That first sub-identifier indicates the terminal device group represents that the terminal device group may be identified by using the first sub-identifier. For example, the first identifier is the group ID of the terminal device group, and the first sub-identifier is a partial ID (for example, a former partial ID) of the group ID.

Similarly, if the network device needs to wake up one terminal device, the network device sends a wake-up signal (referred to as a second wake-up signal for differentiation), where the second wake-up signal includes a UE ID of the terminal device, the UE ID includes the first sub-identifier and a third sub-identifier, and the third sub-identifier represents waking up the terminal device. Correspondingly, the terminal device receives the second wake-up signal, learns, based on the second wake-up signal, that the terminal device is woken up, and then accesses the network device.

In other words, according to Solution 3, the two wake-up manners may be distinguished depending on whether a sub-identifier other than the first sub-identifier in the wake-up signal is the second sub-identifier or the third sub-identifier.

In a possible implementation, the second sub-identifier and the third sub-identifier may be distinguished based on values. For example, a value of the second sub-identifier is a preset value, and a value of the third sub-identifier is a value other than the preset value. For example, the preset value may be all 1s or all 0s. In this manner, a value of the UE ID is different from a value of the group ID.

For example, the identifier in the wake-up signal includes the first sub-identifier and a sub-identifier #1. If a value of the sub-identifier #1 is the preset value (in this case, the sub-identifier #1 is an example of the second sub-identifier), the wake-up signal carrying the identifier is used to wake up one terminal device group indicated by the first sub-identifier in the identifier; or if a value of the sub-identifier #1 is a value other than the preset value (in this case, the sub-identifier #1 is an example of the third sub-identifier), the wake-up signal carrying the identifier is used to wake up one terminal device identified by the identifier.

FIG. 6 is a diagram of an identifier in a wake-up signal.

As shown in FIG. 6, the identifier in the wake-up signal includes the first sub-identifier and the sub-identifier #1. A length of the identifier in the wake-up signal is 16, and the first sub-identifier is 11110000.

For example, if the network device needs to wake up one terminal device, the network device sends the second wake-up signal, where the identifier carried in the second wake-up signal is a UE ID of the terminal device, and the UE ID includes the first sub-identifier and the sub-identifier #1. Assuming that the sub-identifier #1 is 01010101, the UE ID is 11110000 01010101.

For another example, if the network device needs to wake up a group of terminal devices, the network device sends the first wake-up signal, where the first identifier carried in the first wake-up signal includes the first sub-identifier and the sub-identifier #1. Assuming that the value of the sub-identifier #1 is the preset value, and the preset value is 11111111 or 00000000, the first identifier is 11110000 11111111 or 11110000 00000000. It may be learned that, in this example, different terminal device groups may be distinguished based on first sub-identifiers. To be specific, group IDs of different terminal device groups are different, first sub-identifiers of different terminal device groups are different, and second sub-identifiers of different terminal device groups may be the same. For example, values of the second sub-identifiers are the preset values.

It may be understood that, the foregoing is mainly described by using an example in which the second sub-identifier and the third sub-identifier are distinguished based on values. This embodiment of this application is not limited thereto. For example, the second sub-identifier and the third sub-identifier may alternatively be distinguished based on lengths. For example, a length of the second sub-identifier is a preset length.

According to Solution 3, whether the wake-up signal is used to wake up one terminal device or a group of terminal devices may be distinguished depending on whether the identifier in the wake-up signal includes the third sub-identifier or the second sub-identifier.

It may be understood that, the foregoing three solutions are examples for description. This embodiment of this application is not limited thereto. Variations of the foregoing three solutions are applicable to this embodiment of this application. For example, in a possible variation of Solution 3, the identifier in the wake-up signal includes the first sub-identifier and the sub-identifier #1, and the first sub-identifier is the group ID. If the value of the sub-identifier #1 is the preset value, the wake-up signal carrying the identifier is used to wake up one terminal device group identified by the group ID in the identifier; or if the value of the sub-identifier #1 is a value other than the preset value, the wake-up signal carrying the identifier is used to wake up one terminal device identified by the sub-identifier #1 in the identifier, in other words, the sub-identifier #1 is a UE ID of the terminal device. In this manner, a value of the UE ID is different from the preset value. For example, the preset value may be all 1s or all 0s. For example, assuming that a group ID of a terminal device is 11110000, a UE ID of the terminal device is 01010101. If the network device needs to wake up the terminal device, the network device sends a wake-up signal, where an identifier carried in the wake-up signal is 11110000 01010101; or if the network device needs to wake up a terminal device group to which the terminal device belongs, the network device sends a wake-up signal, where an identifier carried in the wake-up signal is 11110000 11111111 or 11110000 00000000.

When the terminal device is in an idle state or an inactive state, the terminal device does not interact with a network side. In this case, the network side cannot learn whether the terminal device receives a signal on a main link or the wake-up link, in other words, cannot learn whether the terminal device is using a main circuit or a wake-up circuit. To avoid a case in which the terminal device cannot be woken up, the network side may send wake-up-related information on both the main link and the wake-up link. An example in which a wake-up manner is paging is used. The network side may send paging-related messages on both the main link and the wake-up link. For example, if the wake-up manner is core network paging, a core network sends paging-related information to the network device; or if the wake-up manner is access network paging, a last serving cell (or a last serving gNB) sends paging-related information to the network device. The network device sends the paging-related messages on both the main link and the wake-up link based on the received paging-related information. The paging-related information includes a UE ID of a paged terminal device and/or a group ID of a paged terminal device group. When a group of terminal devices are to be paged, the core network or the last serving cell sends a group ID of the group of terminal devices to the network device, to reduce paging overheads of the wake-up link. In addition, to send paging on the main link, the core network or the last serving cell sends a UE ID of each terminal device included in the terminal device group to the network device. In a possible manner, after receiving the UE ID of the to-be-paged terminal device and the group ID of the to-be-paged terminal device group, the network device may send the group ID on the wake-up link, and send the UE ID on the main link. However, after receiving the UE ID of the to-be-paged terminal device and the group ID of the to-be-paged terminal device group, the network device cannot determine UE IDs associated with the group ID. In this case, the network device may send both the group ID and the UE ID on the wake-up link, and an objective of reducing signaling overheads cannot be achieved.

The following provides a specific example.

It is assumed that a terminal device 1 and a terminal device 2 belong to a same terminal device group, and the terminal device group and another terminal device 3 are paged. The core network or the last serving cell sends, to the network device, UE IDs of the terminal device 1, the terminal device 2, and the terminal device 3, and a group ID of the terminal device group to which the terminal device 1 and the terminal device 2 belong. If the network device cannot learn terminal devices included in the terminal device group, the network device may send, on the wake-up link, the UE IDs of the terminal device 1, the terminal device 2, and the terminal device 3, and the group ID of the terminal device group to which the terminal device 1 and the terminal device 2 belong, to avoid a case in which some terminal devices are not paged. This increases signaling overheads. In view of this, this embodiment of this application provides a solution: The network device receives second information from the core network or another network device, where the second information includes an association relationship between the first identifier (for example, the group ID) and the UE ID. In this way, the network device may learn of the association relationship between the first identifier (for example, the group ID) and the UE ID, and then may send the group ID of the terminal device group on the wake-up link, and does not need to send, on the wake-up link, the UE ID of the terminal device included in the terminal device group. This reduces the signaling overheads. The another network device is, for example, the last serving cell or the last serving gNB. This is not limited.

The foregoing example is used as an example. If the network device learns of the association relationship between the group ID and the UE ID, the network device only needs to send, on the wake-up link, the UE ID of the terminal device 3 and the group ID of the terminal device group to which the terminal device 1 and the terminal device 2 belong, and the UE ID of the terminal device 1 and the UE ID of the terminal device 2 do not need to be sent.

The following describes two possible implementations.

In a first possible implementation, if the terminal device group is woken up, when sending the UE ID of the woken-up terminal device to the network device, the core network or the another network device indicates the group ID of the woken-up terminal device group to which the terminal device belongs.

After receiving the information sent by the core network or the another network device, if the network device identifies that the terminal device group to which the terminal device belongs is woken up, the network device sends the group ID of the terminal device group on the wake-up link, and does not need to send the UE ID of the terminal device included in the terminal device group.

It is considered that one terminal device may belong to at least two terminal device groups, and the at least two terminal device groups may be simultaneously woken up. Therefore, when sending the UE ID of the woken-up terminal device to the network device, the core network or the another network device may indicate, to the network device, a group ID list of the woken-up terminal device group to which the woken-up terminal device belongs.

In a first example, when the core network or the another network device indicates, to the network device, the group ID of the woken-up terminal device group to which the terminal device belongs, the group ID may be indicated in a form of Table 1.

**Table 1**

| UE ID of a woken-up terminal device | Group ID of a terminal device group to which the woken-up terminal device belongs |
|---|---|
| UE ID #1 | Group ID #1 |
| UE ID #2 | Group ID #2 and Group ID #3 |
| UE ID #3 | |

Table 1 is used as an example. If terminal devices corresponding to the UE ID #1 and the UE ID #2 are woken up, and terminal device groups corresponding to the group ID #1, the group ID #2, and the group ID #3 are woken up, the network device may learn, based on Table 1, that the group ID #1 is associated with the UE ID #1, the group ID #2 is associated with the UE ID #2, and the group ID #3 is associated with the UE ID #2. To be specific, the terminal device group corresponding to the group ID #1 includes the terminal device corresponding to the UE ID #1, the terminal device group corresponding to the group ID #2 includes the terminal device corresponding to the UE ID #2, and the terminal device group corresponding to the group ID #3 includes the terminal device corresponding to the UE ID #2. Therefore, the network device may send only the group ID #1, the group ID #2, and the group ID #3 on the wake-up link, and does not need to send the UE ID #1 and the UE ID #2. In addition, as shown in Table 1, a group ID corresponding to the UE ID #3 is null. For example, that the group ID corresponding to the UE ID #3 is null (null) may be understood as that, a terminal device identified by the UE ID #3 is woken up separately, and the network device may send the UE ID #3 on the wake-up link, to wake up the terminal device identified by the UE ID #3.

In a second example, when the core network or the another network device indicates, to the network device, the group ID of the woken-up terminal device group to which the terminal device belongs, the group ID may be indicated by using the following signaling.

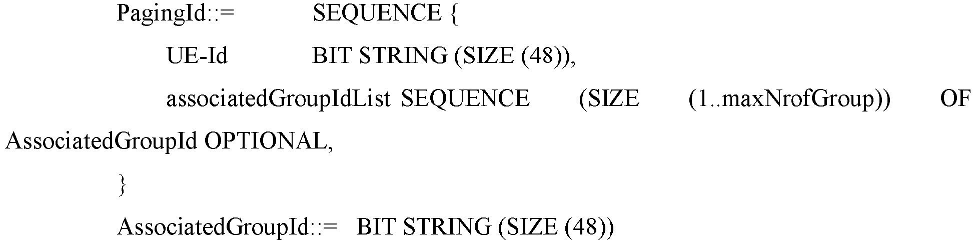

In the foregoing signaling, PagingId indicates identification information of the woken-up (for example, paged) terminal device. For example, PagingId may include two variables: UE-Id and associatedGroupIdList.
(1) UE-Id indicates the UE ID, and a number in SIZE represents a length of the UE ID. In this example, the length of the UE ID is 48 bits. Therefore, the number in SIZE is 48. If the length of the UE ID is of another value, the number in SIZE is the corresponding value. The length of the UE ID is not limited in this embodiment of this application.
(2) associatedGroupIdList indicates the group ID list of the terminal device group to which the current terminal device belongs. Each associatedGroupIdList may include a maximum of maxNrofGroup AssociatedGroupIds, and each AssociatedGroupId indicates a group ID of a terminal device group to which one current terminal device belongs. maxNrofGroup represents a maximum quantity of terminal device groups to which the current terminal device belongs, in other words, the current terminal device belongs to at most maxNrofGroup terminal device groups. In this example, a length of the group ID is 48 bits. Therefore, a number in SIZE is 48. If the length of the group ID is of another value, the number in SIZE is the corresponding value. The length of the group ID is not limited in this embodiment of this application. It may be understood that, associatedGroupIdList is an optional parameter. To be specific, when the terminal device group to which the terminal device belongs is woken up, the core network or the another network device may indicate the parameter to the network device. When the terminal device is woken up and the terminal device group to which the terminal device belongs does not need to be woken up, the core network or the another network device may not indicate the parameter to the network device.

It should be understood that, Table 1 and the foregoing signaling design are merely examples for description, and no limitation is imposed thereto. Any variation of Table 1 and any variation of the foregoing signaling design are applicable to this application. For example, Table 1 may include more UE IDs and/or group IDs.

In a second possible implementation, if the terminal device group is woken up, when sending the group ID of the woken-up terminal device group to the network device, the core network or the another network device indicates the UE ID of the terminal device included in the terminal device group.

After receiving the information sent by the core network or the another network device, if the network device identifies that the terminal device group to which the terminal device belongs is paged, the network device sends the group ID of the terminal device group on the wake-up link, and does not need to send the UE ID of the terminal device included in the terminal device group.

It is considered that one terminal device group includes at least two terminal devices. Therefore, when sending the group ID of the woken-up terminal device group to the network device, the core network or the another network device indicates a UE ID list of the terminal device included in the terminal device group. According to the second possible implementation, if the terminal device group is woken up, the core network or the another network device may indicate, to the network device, only a UE ID list included in the group ID of the woken-up terminal device group, and does not need to separately indicate the UE ID of the terminal device included in the terminal device group. In addition, if a single terminal device is woken up, the core network or the another network device may indicate a UE ID of the woken-up terminal device to the network device.

In a first example, when the core network or the another network device indicates, to the network device, the UE ID of the terminal device included in the terminal device group, the UE ID may be indicated in a form of Table 2.

**Table 2**

| Group ID of a woken-up device group | UE IDs of terminal devices included in the woken-up terminal device group |
|---|---|
| Group ID #1 | UE ID #1, UE ID #2, and UE ID #3 |
| Group ID #2 | UE ID #4 and UE ID #5 |

Table 2 is used as an example. If terminal device groups corresponding to the group ID #1 and the group ID #2 are woken up, the network device may send only the group ID #1 and the group ID #2 on the wake-up link, and does not need to send the UE ID #1, the UE ID #2, the UE ID #3, the UE ID #4, and the UE ID #5.

In a second example, when the core network or the another network device indicates, to the network device, the UE ID of the terminal device included in the terminal device group, the group ID may be indicated by using the following signaling.

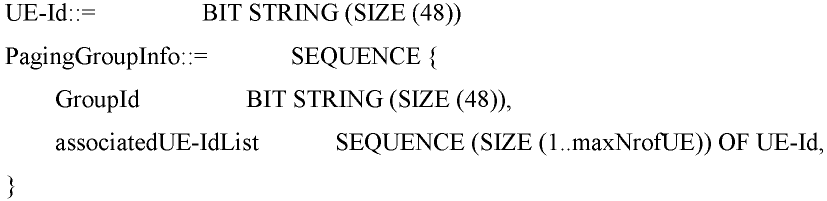

In the foregoing signaling, UE-Id indicates the UE ID, and a number in SIZE represents a length of the UE ID. In this example, the length of the UE ID is 48 bits. Therefore, the number in SIZE is 48. If the length of the UE ID is of another value, the number in SIZE is the corresponding value. The length of the UE ID is not limited in this embodiment of this application.

PagingGroupInfo indicates information about the woken-up (for example, paged) terminal device group, and PagingGroupInfo includes two variables: GroupId and associatedUE-IdList.
(1) GroupId indicates the group ID. In this example, a length of the group ID is 48 bits. Therefore, a number in SIZE is 48. If the length of the group ID is of another value, the number in SIZE is the corresponding value. The length of the group ID is not limited in this embodiment of this application.
(2) associatedUE-IdList indicates the UE ID list of the terminal device included in the current terminal device group. Each associatedUE-IdList may include a maximum of maxNrofUE UE IDs. maxNrofUE represents a maximum quantity of terminal devices included in the current terminal device group.

It should be understood that, Table 2 and the foregoing signaling design are merely examples for description, and no limitation is imposed thereto. Any variation of Table 2 and any variation of the foregoing signaling design are applicable to this application. For example, Table 2 may include more UE IDs and/or group IDs.

The foregoing two possible implementations may be used separately, or may be used in combination with the foregoing solutions, for example, used in combination with Solution 1 and Solution 2.

It may be understood that, that the core network or the another network device indicates the association relationship between the group ID and the UE ID to the network device is an example for description. This embodiment of this application is not limited thereto. For example, in another possible solution, if the terminal device group is woken up, the core network or the another network device sends the group ID of the terminal device group to the network device, and does not need to send, to the network device, the UE ID of the terminal device included in the terminal device group. In this way, a case in which the network device sends both the group ID of the terminal device group and the UE ID of the terminal device in the terminal device group on the wake-up link may also be avoided.

For example, an information element carrying the group ID and an information element carrying the UE ID are different. For differentiation, the information element carrying the group ID is denoted as an information element #1, and the information element carrying the UE ID is denoted as an information element #2. If the terminal device group is woken up, the core network or the last serving cell sends the information element #1 to the network device, where the information element #1 includes the group ID. After receiving the information element #1, the network device may learn that an identifier carried by the information element #1 is the group identifier (namely, the group ID). Therefore, the network device sends the group ID on the wake-up link.

For another example, a value range of the group ID and a value range of the UE ID are different, as described in Solution 2. After receiving the identifier, the network device may determine, based on a value of the identifier, that the identifier is the group identifier (namely, the group ID), and then send the group ID on the wake-up link.

The foregoing mainly describes solutions related to the group ID and the UE ID. The following describes solutions related to frequency resources of the wake-up signal.

The wake-up signal and another signal may be deployed in a frequency division multiplexing (frequency division multiplexing, FDM) manner. For example, assuming that a system bandwidth is F, some of the frequency resources may be allocated to the wake-up signal, and the remaining frequency resources may be allocated to another signal in a cell for use. For example, the frequency resources allocated to the wake-up signal may include at least two subbands (subbands). The at least two subbands may be inconsecutive subbands, or may be consecutive subbands. This is not limited. It may be understood that, the subband may alternatively be replaced with any one of the following: a narrow band (narrow band), a bandwidth part (bandwidth part, BWP), a frequency range, a physical resource block (physical resource block, PRB), a resource block group (resource block group, RBG), or the like. This is not limited.

FIG. 7 is a diagram of frequency resources occupied by a wake-up signal and another signal.

As shown in FIG. 7, subbands allocated to the wake-up signal include a subband 1 and a subband 2. In other words, a network device may send the wake-up signal on the subband 1 and the subband 2, and send the another signal on a subband other than the subband 1 and the subband 2. In this way, a terminal device may monitor the wake-up signal on the subband 1 and/or the subband 2.

In some cases, where for example, service load in a cell changes, frequency resources used by the network device to send the wake-up signal may change. FIG. 7 is used as an example. The network device may change from originally sending the wake-up signal on the subband 1 and the subband 2 to sending the wake-up signal on the subband 1. That is, the network device does not send the wake-up signal on the subband 2. If still monitoring the wake-up signal on the original subband 1 and/or the original subband 2, the terminal device may not obtain the wake-up signal through monitoring or cannot obtain the wake-up signal in a timely manner through monitoring. Therefore, embodiments of this application provide a manner, so that the terminal device can correctly receive the wake-up signal.

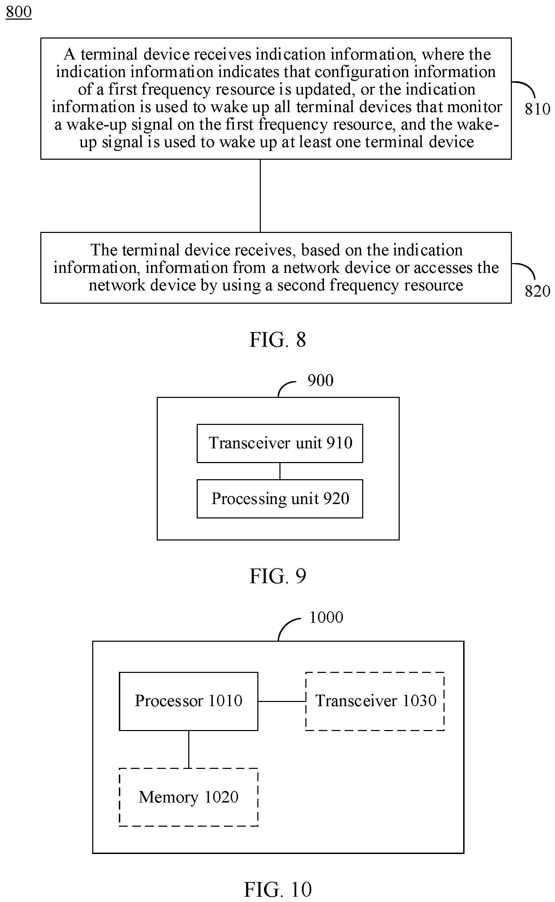

FIG. 8 is a diagram of a communication method 800 according to another embodiment of this application. The method 800 may include the following steps.

810: A terminal device receives indication information, where the indication information indicates that configuration information of a first frequency resource is updated, or the indication information is used to wake up all terminal devices that monitor a wake-up signal on the first frequency resource, and the wake-up signal is used to wake up at least one terminal device.

Correspondingly, a network device sends the indication information.

That the indication information indicates that configuration information of a first frequency resource is updated may be replaced with any one of the following: The indication information indicates that configuration information of a wake-up link is updated, the indication information indicates that configuration information of a wake-up circuit is updated, or the indication information indicates that configuration information of the wake-up signal is updated. Similarly, that the indication information is used to wake up all terminal devices that monitor a wake-up signal on the first frequency resource may also be replaced with any one of the following: The indication information is used to wake up some or all terminal devices that monitor the wake-up signal on a wake-up link, or the indication information is used to wake up some or all terminal devices that monitor the wake-up signal on a wake-up circuit.

In a possible case, the indication information is used to wake up the some terminal devices that monitor the wake-up signal on the wake-up link. For example, frequency resources allocated to the wake-up link include a first part of frequency resources and a second part of frequency resources. If configuration information of the first part of frequency resources is updated, and configuration information of the second part of frequency resources is not updated, the indication information may be used to wake up a terminal device that monitors a wake-up signal on the first part of frequency resources. In other words, a terminal device that monitors a wake-up signal on the second part of frequency resources may not need to be woken up. The example in FIG. 7 is used as an example. The indication information may be used to wake up a terminal device that monitors a wake-up signal on a subband 2. In other words, a terminal device that monitors the wake-up signal on a subband 1 may not need to be woken up.

In another possible case, the indication information is used to wake up all terminal devices that monitor the wake-up signal on the wake-up link. For example, provided that the configuration information of the wake-up link is updated, the indication information is used to wake up all the terminal devices that monitor the wake-up signal on the wake-up link. The example in FIG. 7 is used as an example. The indication information may be used to wake up all terminal devices that monitor the wake-up signals on the subband 1 and the subband 2.

Optionally, the first frequency resource is the frequency resource corresponding to the wake-up link, or the first frequency resource is a part of subbands corresponding to the wake-up link. If the first frequency resource is the part of subbands corresponding to the wake-up link, the part of subbands may be an updated subband. FIG. 7 is used as an example. The first frequency resource may be the frequency resources corresponding to the wake-up link, namely, the subband 1 and the subband 2. Alternatively, the first frequency resource may be the part of subbands corresponding to the wake-up link, for example, the subband 2.

820: The terminal device receives, based on the indication information, information from the network device or accesses the network device by using a second frequency resource.

Correspondingly, the network device sends the information to the terminal device by using the second frequency resource, or the network device receives a random access preamble from the terminal device by using the second frequency resource.

Optionally, that the terminal device receives information from the network device by using a second frequency resource includes: The terminal device receives configuration information of the first frequency resource from the network device by using the second frequency resource. In other words, the terminal device receives the updated configuration information of the first frequency resource by using the second frequency resource.

That the terminal device receives information from the network device by using a second frequency resource is used as an example. That the terminal device receives information from the network device by using a second frequency resource may be replaced with any one of the following: The terminal device receives the information from the network device through a main circuit, or the terminal device receives the information from the network device on a main link.

The configuration information of the first frequency resource may represent configuration information related to the wake-up link. For example, the configuration information of the first frequency resource includes at least one of the following information: a bandwidth of the first frequency resource, a frequency domain position of the first frequency resource, or the configuration information of the wake-up signal. The configuration information of the wake-up signal may include, for example, at least one of the following: a length of the wake-up signal, a format of the wake-up signal, or related information of a synchronization signal. The terminal device may learn of a position and/or another related configuration of the first frequency resource based on the configuration information of the first frequency resource, to correctly monitor the wake-up signal on the first frequency resource.

Optionally, that the terminal device receives information from the network device by using a second frequency resource includes: The terminal device receives the configuration information of the first frequency resource from the network device by using the second frequency resource, or the terminal device receives the configuration information of the wake-up link from the network device by using the second frequency resource.

Optionally, the second frequency resource is a frequency resource corresponding to the main link, or the second frequency resource is a part of frequency resources corresponding to the main link. FIG. 7 is used as an example. The second frequency resource may be a frequency resource other than the subband 1 and the subband 2, or the second frequency resource may be a part of frequency resources other than the subband 1 and the subband 2.

The following describes two possible cases with reference to different content of the indication information by using the wake-up link and the main link as an example.

In a first possible case, the network device sends the indication information to the terminal device, where the indication information indicates that the configuration information of the wake-up link is updated.

For example, if the configuration information of the wake-up link is updated, the network device sends the indication information to the terminal device, to indicate that the configuration information of the wake-up link is updated. Correspondingly, the terminal device receives the indication information, and determines, based on the indication information, that the configuration information of the wake-up link is updated, so that the terminal device may switch to the main link, and receive the updated configuration information of the wake-up link on the main link.

For example, the network device sends a preset identifier to the terminal device. The terminal device receives the preset identifier, and learns, based on the preset identifier, that the configuration information of the wake-up link is updated. The preset identifier may indicate that the configuration information of the wake-up link is updated. In other words, if the terminal device receives the preset identifier, the terminal device receives the updated configuration information of the wake-up link on the main link.

For example, the preset identifier may be an identifier whose value is a preset value. For example, the value of the preset identifier is "all 0s" or "all 1s". A length of the preset identifier and a length of a UE ID may be the same or different. The length of the preset identifier and a length of a group ID may be the same or different.

For another example, the preset identifier may be an identifier whose length is a preset length. For example, the length of the preset identifier is less than the length of the UE ID of the terminal device group or the length of the group ID of the terminal device group. For another example, the length of the preset identifier is greater than the length of the UE ID of the terminal device group or the length of the group ID of the terminal device group..

It may be understood that, the foregoing is an example for description, and a specific form of the indication information is not limited in this embodiment of this application.

In a second possible case, the network device sends the indication information to the terminal device, where the indication information is used to wake up some or all terminal devices that monitor the wake-up signal on the wake-up link.

For example, if the configuration information of the wake-up link is updated, the network device sends the wake-up signal, where the wake-up signal is used to wake up all terminal devices that monitor the wake-up signal in one cell, or correspondingly, the terminal device receives the wake-up signal, and switches to the main link. After switching to the main link, the terminal device may receive the information from the network device on the main link, or access the network device, and then may receive the updated configuration information of the wake-up link on the main link.

For example, the network device sends the wake-up signal to the terminal device, where an identifier in the wake-up signal is a preset identifier. The terminal device receives the wake-up signal, and learns, based on that the identifier in the wake-up signal is the preset identifier, that the terminal device is woken up. Therefore, the terminal device may switch to the main link, to receive the information from the network device or access the network device. The preset identifier may implicitly indicate to wake up all terminal devices that monitor the wake-up signal in one cell.

For example, the preset identifier may be an identifier whose value is a preset value. For example, the value of the preset identifier is "all 0s" or "all 1s". A length of the preset identifier and a length of a UE ID may be the same or different. The length of the preset identifier and a length of a group ID may be the same or different.

For another example, the preset identifier may be an identifier whose length is a preset length. For example, the length of the preset identifier is less than the length of the UE ID of the terminal device or the length of the group ID of the terminal device. For another example, the length of the preset identifier is greater than the length of the UE ID of the terminal device or the length of the group ID of the terminal device.

In the foregoing two possible implementations, optionally, after receiving the updated configuration information of the wake-up link on the main link, the terminal device may switch to, when a preset condition is met, the wake-up link for operating. The preset condition may include: For example, a distance between the terminal device and the network device is short, and/or a moving speed of the terminal device is low. That a distance between the terminal device and the network device is short represents that the terminal device is located at a position at which network performance of the network device is good. When the distance between the terminal device and the network device is short, the terminal device may switch to the wake-up link for operating. Optionally, the terminal device may determine the distance between the terminal device and the network device by measuring signal quality (or channel quality) of a serving cell. Optionally, the terminal device may determine the moving speed of the terminal device by measuring a variation of the signal quality of the serving cell.

In the foregoing two possible implementations, a network side actively notifies the terminal device, so that the terminal device can quickly obtain the updated configuration information of the wake-up link. This is not limited. For example, the terminal device may alternatively actively obtain the updated configuration information of the wake-up link. For example, the terminal device measures the wake-up link, and receives no reference signal (for example, a periodic synchronization signal) within a period of time. The terminal device considers that the terminal device leaves coverage of the wake-up signal, and switches to the main link. In this way, the terminal device may also receive the configuration information of the wake-up link on the main link.

It may be understood that, the foregoing mainly uses an example in which the wake-up signal is used to wake up a group of terminal devices for description. This embodiment of this application is not limited thereto. For example, the wake-up signal may alternatively wake up at least two groups of terminal devices.

It may be further understood that, in embodiments of this application, "monitoring" may also be replaced with "detecting" or "reading". For example, "monitoring a wake-up signal" may also be replaced with "detecting a wake-up signal" or "reading a wake-up signal".

It may be further understood that, in some of the foregoing embodiments, "transmission" is mentioned. Unless otherwise specified, transmission includes receiving and/or sending. For example, transmitting a signal may include receiving a signal and/or sending a signal.

It may be further understood that, in embodiments of this application, if the terminal device learns that the terminal device is woken up, for example, learns, based on the wake-up signal, that the terminal device is woken up, the terminal device may immediately access the network device, or the terminal device may access the network device at an interval of a period of time. This is not limited.

It may be further understood that, in some of the foregoing embodiments, the main link and the wake-up link are mainly used as examples for description. This application is not limited thereto. For example, the "wake-up link" may also be replaced with a "first module", or may be replaced with a "wake-up circuit", or may be replaced with "being in a first state", or may be replaced with "being in a first mode". For example, "the terminal device receives a signal on a wake-up link" may also be replaced with "the terminal device receives a signal through the first module (or the wake-up circuit)". The "main link" may also be replaced with a "second module", or may be replaced with a "main circuit", or may be replaced with "being in a second state", or may be replaced with "being in a second mode". For example, "the terminal device receives a signal on the main link" may also be replaced with "the terminal device receives a signal through the second module (or the main circuit)".

It may be further understood that, in embodiments of this application, interaction between the terminal device and the network device is mainly used as an example for description. This application is not limited thereto. The terminal device may be replaced with a receive end device, and the receive end device may be a terminal device or a network device. The network device may be replaced with a transmit end device, and the transmit end device may be a terminal device or a network device. For example, the "terminal device" may be replaced with a "first terminal device", and the "network device" may be replaced with a "second terminal device".

It may be further understood that, some optional features in embodiments of this application may not depend on another feature in some scenarios, or may be combined with another feature in some scenarios. This is not limited.

It may be further understood that, the solutions in embodiments of this application may be properly combined for use, and explanations or descriptions of terms in embodiments may be mutually referenced or explained in embodiments. This is not limited.

It may be further understood that, in the foregoing method embodiments, methods and operations implemented by the terminal device may also be implemented by a component (such as a chip or a circuit) of the terminal device. In addition, methods and operations implemented by the network device may also be implemented by a component (such as a chip or a circuit) of the network device. This is not limited.

Corresponding to the methods provided in the foregoing method embodiments, embodiments of this application further provide a corresponding apparatus. The apparatus includes corresponding modules configured to perform the foregoing method embodiments. The module may be software, hardware, or a combination of software and hardware. It may be understood that, the technical features described in the foregoing method embodiments are also applicable to the following apparatus embodiments.

FIG. 9 is a schematic block diagram of a communication apparatus 900 according to an embodiment of this application. The apparatus 900 includes a transceiver unit 910 and a processing unit 920. The transceiver unit 910 may be configured to implement a corresponding communication function. The transceiver unit 910 may be further referred to as a communication interface or a communication unit. The processing unit 920 may be configured to perform data or information processing.

Optionally, the apparatus 900 further includes a storage unit. The storage unit may be configured to store instructions and/or data. The processing unit 920 may read the instructions and/or the data in the storage unit, to enable the apparatus to implement actions performed by the terminal device in the foregoing method embodiments.

In a possible design, the apparatus 900 may be configured to perform actions performed by the terminal device in the foregoing method embodiments. In this case, the apparatus 900 may be the terminal device or a component of the terminal device. The transceiver unit 910 is configured to perform receiving and sending-related operations on the terminal device side in the foregoing method embodiments, and the processing unit 920 is configured to perform processing-related operations on the terminal device side in the foregoing method embodiments.

In a possible implementation, the transceiver unit 910 is configured to receive a first wake-up signal, where the first wake-up signal is used to wake up a terminal device group, the terminal device group includes at least two terminal devices, and the at least two terminal devices include the terminal device; and the processing unit 920 is configured to access a network device based on the first wake-up signal.

For example, the first wake-up signal includes a first identifier, and the first identifier is associated with the terminal device group.

For example, the first wake-up signal includes first information, and the first information represents that the first wake-up signal is used to wake up the terminal device group.

For example, the first information indicates that a format of the first wake-up signal is a first format, and the first format represents that the first wake-up signal is used to wake up the terminal device group.

For example, the first identifier includes a first sub-identifier and a second sub-identifier, the first sub-identifier indicates the terminal device group, and the second sub-identifier represents waking up the terminal device group indicated by the first sub-identifier.

For example, a value of the second sub-identifier is a preset value.

For example, the first identifier is a group identifier of the terminal device group, a value of the group identifier falls within a first value range, a value of an identifier of each terminal device in the terminal device group falls within a second value range, and the first value range is different from the second value range.

The apparatus 900 may implement steps or procedures performed by the terminal device in the method embodiments according to embodiments of this application. The apparatus 900 may include a unit configured to perform the method performed by the terminal device in the embodiment shown in FIG. 4 or FIG. 8. A specific process in which each unit performs the foregoing corresponding steps has been described in detail in the foregoing method embodiments. For brevity, details are not described herein again.

In another possible design, the apparatus 900 may be configured to perform actions performed by the network device in the foregoing method embodiments. In this case, the apparatus 900 may be the network device or a component of the network device. The transceiver unit 910 is configured to perform receiving and sending-related operations on the network device side in the foregoing method embodiments, and the processing unit 920 is configured to perform processing-related operations on the network device side in the foregoing method embodiments.

In a possible implementation, the transceiver unit 910 is configured to send a first wake-up signal, where the first wake-up signal is used to wake up a terminal device group, and the terminal device group includes at least two terminal devices; and the transceiver unit 910 is further configured to receive random access preamble sequences from the at least two terminal devices.

For example, the first wake-up signal includes a first identifier, and the first identifier is associated with the terminal device group.

For example, the first wake-up signal includes first information, and the first information represents that the first wake-up signal is used to wake up the terminal device group.

For example, the first information indicates that a format of the first wake-up signal is a first format, and the first format represents that the first wake-up signal is used to wake up the terminal device group.

Optionally, the transceiver unit 910 is further configured to send a third wake-up signal, where the third wake-up signal includes an identifier of a terminal device, a format of the third wake-up signal is a second format, and the second format represents that the third wake-up signal is used to wake up the terminal device.

For example, the first identifier includes a first sub-identifier and a second sub-identifier, the first sub-identifier indicates the terminal device group, and the second sub-identifier represents waking up the terminal device group indicated by the first sub-identifier.

For example, a value of the second sub-identifier is a preset value.

Optionally, the transceiver unit 910 is further configured to send a second wake-up signal, where the second wake-up signal includes an identifier of a terminal device, the identifier of the terminal device includes the first sub-identifier and a third sub-identifier, and the third sub-identifier represents waking up the terminal device.

For example, the first identifier is a group identifier of the terminal device group, a value of the group identifier falls within a first value range, a value of an identifier of each terminal device in the terminal device group falls within a second value range, and the first value range is different from the second value range.

Optionally, the transceiver unit 910 is further configured to receive second information, where the second information includes an association relationship between the first identifier and identifiers of the at least two terminal devices, and the first identifier is associated with the terminal device group.

Optionally, the transceiver unit 910 is specifically configured to send the first wake-up signal based on the association relationship.

Optionally, the transceiver unit 910 is specifically configured to receive the second information from a core network or another network device.

The apparatus 900 may implement steps or procedures performed by the network device in the method embodiment according to embodiments of this application. The apparatus 900 may include a unit configured to perform the method performed by the network device in the embodiment shown in FIG. 4 or FIG. 8. A specific process in which each unit performs the foregoing corresponding steps has been described in detail in the foregoing method embodiments. For brevity, details are not described herein again.

It should be understood that, the apparatus 900 is embodied in a form of a functional unit. The term "unit" herein may refer to an application-specific integrated circuit (application-specific integrated circuit, ASIC), an electronic circuit, a processor (for example, a shared processor, a dedicated processor, or a group processor) and a memory that are configured to execute at least one software or firmware programs, a combined logic circuit, and/or another suitable component that supports the described functions. In an optional example, a person skilled in the art may understand that, the apparatus 900 may be specifically the terminal device in the foregoing embodiments, and may be configured to perform procedures and/or steps corresponding to the terminal device in the foregoing method embodiments, or the apparatus 900 may be specifically the network device in the foregoing embodiments, and may be configured to perform procedures and/or steps corresponding to the network device in the foregoing method embodiments. To avoid repetition, details are not described herein again.

The apparatus 900 in the foregoing solutions has a function of implementing corresponding steps performed by the terminal device in the foregoing methods. The function may be implemented by hardware, or may be implemented by hardware executing corresponding software. The hardware or the software includes at least one modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit may be replaced with a processor, to separately perform receiving and sending operations and related processing operations in the method embodiments.

In addition, the transceiver unit 910 may alternatively be a transceiver circuit (for example, may include a receiver circuit and a transmitter circuit), and the processing unit may be a processing circuit.

It should be noted that, the apparatus in FIG. 9 may be a device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

FIG. 10 shows another communication apparatus 1000 according to an embodiment of this application. The apparatus 1000 includes a processor 1010. The processor 1010 is coupled to a memory 1020. The memory 1020 is configured to store a computer program or instructions and/or data. The processor 1010 is configured to: execute the computer program or the instructions stored in the memory 1020, or read data stored in the memory 1020, to perform the method in the foregoing method embodiments.

Optionally, there is at least one processor 1010.

Optionally, there is at least one memory 1020.

Optionally, the memory 1020 and the processor 1010 are integrated together, or are disposed separately.

Optionally, as shown in FIG. 10, the apparatus 1000 further includes a transceiver 1030. The transceiver 1030 is configured to receive and/or send a signal. For example, the processor 1010 is configured to control the transceiver 1030 to receive and/or send a signal.

In a solution, the apparatus 1000 is configured to implement operations performed by a terminal device in the foregoing method embodiments.

For example, the processor 1010 is configured to execute the computer program or the instructions stored in the memory 1020, to implement related operations of the terminal device in the foregoing method embodiments, for example, the method performed by the terminal device in the embodiment shown in FIG. 4, or the method performed by the terminal device in the embodiment shown in FIG. 8.

In another solution, the apparatus 1000 is configured to implement operations performed by the network device in the foregoing method embodiments.

For example, the processor 1010 is configured to execute the computer program or the instructions stored in the memory 1020, to implement related operations of the network device in the foregoing method embodiments, for example, the method performed by the network device in the embodiment shown in FIG. 4, or the method performed by the network device in the embodiment shown in FIG. 8.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It should be further understood that, the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example but not limitation, the RAM includes the following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that, the memory described in this specification aims to include but is not limited to these memories and any memory of another proper type.

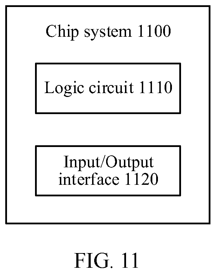

FIG. 11 shows a chip system 1100 according to an embodiment of this application. The chip system 1100 (or may also be referred to as a processing system) includes a logic circuit 1110 and an input/output interface (input/output interface) 1120.

The logic circuit 1110 may be a processing circuit in the chip system 1100. The logic circuit 1110 may be coupled to and connected to a storage unit, and invoke instructions in the storage unit, so that the chip system 1100 can implement methods and functions in embodiments of this application. The input/output interface 1120 may be an input/output circuit in the chip system 1100, and outputs information processed by the chip system 1100, or inputs to-be-processed data or signaling information into the chip system 1100 for processing.

Specifically, for example, if the chip system 1100 is installed on the terminal device, the logic circuit 1110 is coupled to the input/output interface 1120, and the input/output interface 1120 may input the wake-up signal into the logic circuit 1110 for processing.

In a solution, the chip system 1100 is configured to implement operations performed by the terminal device in the foregoing method embodiments.

For example, the logic circuit 1110 is configured to implement processing-related operations performed by the terminal device in the foregoing method embodiments, for example, processing-related operations performed by the terminal device in the embodiment shown in FIG. 4 or FIG. 8. The input/output interface 1120 is configured to implement sending and/or receiving-related operations performed by the terminal device in the foregoing method embodiments, for example, sending and/or receiving-related operations performed by the terminal device in the embodiment shown in FIG. 4 or FIG. 8.

In another solution, the chip system 1100 is configured to implement operations performed by the network device in the foregoing method embodiments.

For example, the logic circuit 1110 is configured to implement processing-related operations performed by the network device in the foregoing method embodiments, for example, processing-related operations performed by the network device in the embodiment shown in FIG. 4 or FIG. 8. The input/output interface 1120 is configured to implement sending and/or receiving-related operations performed by the network device in the foregoing method embodiments, for example, sending and/or receiving-related operations performed by the network device in the embodiment shown in FIG. 4 or FIG. 8.

Embodiments of this application further provide a computer-readable storage medium, where the computer-readable storage medium stores computer instructions used to implement the method performed by the device in the foregoing method embodiments.

For example, when the computer program is executed by a computer, the computer is enabled to implement the method performed by the terminal device in the foregoing method embodiments.

For another example, when the computer program is executed by a computer, the computer is enabled to implement the method performed by the network device in the foregoing method embodiments.

Embodiments of this application further provide a computer program product, including instructions. When the instructions are executed by a computer, the method performed by the terminal device or the network device in the foregoing method embodiments is implemented.

Embodiments of this application further provide a communication system. The communication system includes the terminal device and the network device in the foregoing embodiments.

For explanations and beneficial effect of related content of any one of the apparatuses provided above, refer to the corresponding method embodiment provided above. Details are not described herein again.

In the several embodiments provided in this application, it should be understood that, the disclosed system, apparatus, and method may be implemented in other manners. For example, the described apparatus embodiment is merely an example. For example, division into the units is merely logical function division and may be other division in actual implementation. For example, at least two units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or a part of the embodiments may be implemented in a form of a computer program product. The computer program product includes at least one computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wireline (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating at least one usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the foregoing usable medium includes but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, a first wake-up signal, wherein the first wake-up signal is used to wake up a terminal device group, the terminal device group comprises at least two terminal devices, and the at least two terminal devices comprise the terminal device; and
accessing, by the terminal device, a network device based on the first wake-up signal.

2. The method according to claim 1, wherein the first wake-up signal comprises a first identifier, and the first identifier is associated with the terminal device group.

3. The method according to claim 1 or 2, wherein the first wake-up signal comprises first information, and the first information represents that the first wake-up signal is used to wake up the terminal device group.

4. The method according to claim 3, wherein the first information indicates that a format of the first wake-up signal is a first format, and the first format represents that the first wake-up signal is used to wake up the terminal device group.

5. The method according to claim 2, wherein
the first identifier comprises a first sub-identifier and a second sub-identifier, the first sub-identifier indicates the terminal device group, and the second sub-identifier represents waking up the terminal device group indicated by the first sub-identifier.

6. The method according to claim 5, wherein a value of the second sub-identifier is a preset value.

7. The method according to claim 2, wherein the first identifier is a group identifier of the terminal device group, a value of the group identifier falls within a first value range, a value of an identifier of each terminal device in the terminal device group falls within a second value range, and the first value range is different from the second value range.

8. A communication method, comprising:
sending, by a network device, a first wake-up signal, wherein the first wake-up signal is used to wake up a terminal device group, and the terminal device group comprises at least two terminal devices; and
receiving, by the network device, random access preamble sequences from the at least two terminal devices.

9. The method according to claim 8, wherein the first wake-up signal comprises a first identifier, and the first identifier is associated with the terminal device group.

10. The method according to claim 8 or 9, wherein the first wake-up signal comprises first information, and the first information represents that the first wake-up signal is used to wake up the terminal device group.

11. The method according to claim 10, wherein the first information indicates that a format of the first wake-up signal is a first format, and the first format represents that the first wake-up signal is used to wake up the terminal device group.

12. The method according to claim 11, wherein the method further comprises:
sending, by the network device, a third wake-up signal, wherein the third wake-up signal comprises an identifier of a terminal device, a format of the third wake-up signal is a second format, and the second format represents that the third wake-up signal is used to wake up the terminal device.

13. The method according to claim 9, wherein the first identifier comprises a first sub-identifier and a second sub-identifier, the first sub-identifier indicates the terminal device group, and the second sub-identifier represents waking up the terminal device group indicated by the first sub-identifier.

14. The method according to claim 13, wherein a value of the second sub-identifier is a preset value.

15. The method according to claim 13 or 14, wherein the method further comprises:
sending, by the network device, a second wake-up signal, wherein the second wake-up signal comprises an identifier of a terminal device, the identifier of the terminal device comprises the first sub-identifier and a third sub-identifier, and the third sub-identifier represents waking up the terminal device.

16. The method according to claim 9, wherein the first identifier is a group identifier of the terminal device group, a value of the group identifier falls within a first value range, a value of an identifier of each terminal device in the terminal device group falls within a second value range, and the first value range is different from the second value range.

17. The method according to any one of claims 8 to 16, wherein before the sending, by a network device, a first wake-up signal, the method further comprises:
receiving, by the network device, second information, wherein the second information comprises an association relationship between the first identifier and identifiers of the at least two terminal devices, and the first identifier is associated with the terminal device group.

18. The method according to claim 17, wherein the sending, by a network device, a first wake-up signal comprises:
sending, by the network device, the first wake-up signal based on the association relationship.

19. The method according to claim 17 or 18, wherein the receiving, by the network device, second information comprises:
receiving, by the network device, the second information from a core network or another network device.

20. A terminal device, comprising a transceiver unit and a processing unit, wherein
the transceiver unit is configured to receive a first wake-up signal, wherein the first wake-up signal is used to wake up a terminal device group, the terminal device group comprises at least two terminal devices, and the at least two terminal devices comprise the terminal device; and
the processing unit is configured to access a network device based on the first wake-up signal.

21. The terminal device according to claim 20, wherein the first wake-up signal comprises a first identifier, and the first identifier is associated with the terminal device group.

22. The terminal device according to claim 20 or 21, wherein the first wake-up signal comprises first information, and the first information represents that the first wake-up signal is used to wake up the terminal device group.

23. The terminal device according to claim 22, wherein the first information indicates that a format of the first wake-up signal is a first format, and the first format represents that the first wake-up signal is used to wake up the terminal device group.

24. The terminal device according to claim 23, wherein
the first identifier comprises a first sub-identifier and a second sub-identifier, the first sub-identifier indicates the terminal device group, and the second sub-identifier represents waking up the terminal device group indicated by the first sub-identifier.

25. The terminal device according to claim 24, wherein a value of the second sub-identifier is a preset value.

26. The terminal device according to claim 21, wherein the first identifier is a group identifier of the terminal device group, a value of the group identifier falls within a first value range, a value of an identifier of each terminal device in the terminal device group falls within a second value range, and the first value range is different from the second value range.

27. A network device, comprising a transceiver unit, wherein
the transceiver unit is configured to send a first wake-up signal, wherein the first wake-up signal is used to wake up a terminal device group, and the terminal device group comprises at least two terminal devices; and
the transceiver unit is further configured to receive random access preamble sequences from the at least two terminal devices.

28. The network device according to claim 27, wherein the first wake-up signal comprises a first identifier, and the first identifier is associated with the terminal device group.

29. The network device according to claim 27 or 28, wherein the first wake-up signal comprises first information, and the first information represents that the first wake-up signal is used to wake up the terminal device group.

30. The network device according to claim 29, wherein the first information indicates that a format of the first wake-up signal is a first format, and the first format represents that the first wake-up signal is used to wake up the terminal device group.

31. The network device according to claim 30, wherein
the transceiver unit is further configured to send a third wake-up signal, wherein the third wake-up signal comprises an identifier of a terminal device, a format of the third wake-up signal is a second format, and the second format represents that the third wake-up signal is used to wake up the terminal device.

32. The network device according to claim 28, wherein the first identifier comprises a first sub-identifier and a second sub-identifier, the first sub-identifier indicates the terminal device group, and the second sub-identifier represents waking up the terminal device group indicated by the first sub-identifier.

33. The network device according to claim 32, wherein a value of the second sub-identifier is a preset value.

34. The network device according to claim 32 or 33, wherein
the transceiver unit is further configured to send a second wake-up signal, wherein the second wake-up signal comprises an identifier of a terminal device, the identifier of the terminal device comprises the first sub-identifier and a third sub-identifier, and the third sub-identifier represents waking up the terminal device.

35. The network device according to claim 28, wherein the first identifier is a group identifier of the terminal device group, a value of the group identifier falls within a first value range, a value of an identifier of each terminal device in the terminal device group falls within a second value range, and the first value range is different from the second value range.

36. The network device according to any one of claims 27 to 35, wherein
the transceiver unit is further configured to receive second information, wherein the second information comprises an association relationship between the first identifier and identifiers of the at least two terminal devices, and the first identifier is associated with the terminal device group.

37. The network device according to claim 36, wherein that the transceiver unit is configured to send a first wake-up signal comprises:
the transceiver unit is configured to send the first wake-up signal based on the association relationship.

38. The network device according to claim 36 or 37, wherein that the transceiver unit is configured to receive second information comprises:
the transceiver unit is configured to receive the second information from a core network or another network device.

39. A communication apparatus, comprising:
a processor, configured to execute a computer program stored in a memory, to enable the apparatus to perform the method according to any one of claims 1 to 19.

40. The apparatus according to claim 39, wherein the apparatus further comprises the memory and/or a communication interface, and the communication interface is coupled to the processor; and
the communication interface is configured to input and/or output information.

41. The apparatus according to claim 39 or 40, wherein the apparatus is a chip.

42. A computer-readable storage medium, wherein a computer program is stored on the computer-readable storage medium; and when the computer program is run on a computer, the computer is enabled to perform the method according to any one of claims 1 to 19.

43. A computer program product, wherein the computer program product comprises instructions for performing the method according to any one of claims 1 to 19.

44. A communication system, comprising a terminal device and a network device, wherein
the terminal device is the terminal device according to any one of claims 20 to 26, and the network device is the network device according to any one of claims 27 to 38.
